# EUROPEAN PATENT SPECIFICATION

(11) **EP 4 303 760 B1**
(45) Date of publication and mention of the grant of the patent: **02.12.2026**
(21) Application number: 23190822.9
(22) Date of filing: 30.12.2016
(51) Int. Cl.: G06K 13/07, G06K 13/077, B41M 3/00, B41J 3/60, B41J 11/42, B41J 13/12, B65H 85/00

(54) **CARD PRINTING MECHANISM WITH CARD RETURN PATH**
KARTENDRUCKMECHANISMUS MIT KARTENRÜCKWEG
MÉCANISME D'IMPRESSION DE CARTE AVEC CHEMIN DE RETOUR DE CARTE

(30) Priority: 08.01.2016 US 201662276375 P
(43) Date of publication of application: 10.01.2024
(60) Divisional application: 26181531.0 / 4 793 216
(62) Document number(s) of the earlier application(s) in accordance with Art. 76 EPC: 20187089.6 / 3 745 307; 16884229.2 / 3 383 662
(73) Proprietor: Entrust Corporation, Shakopee, MN 55379-3817 (US)
(72) Inventor: BEECH, Brian, Shakopee, MN 55379-3817 (US); WAGENER, Thomas J., Shakopee, MN 55379-3817 (US); FLITSCH, Timothy J., Shakopee, MN 55379-3817 (US)
(74) Representative: Meissner Bolte Partnerschaft mbB

(56) References cited:
- EP-A2- 0 835 739
- US-A1- 2014 063 086

## Description

### Field

This disclosure relates to card processing systems that personalize or otherwise process plastic cards such as financial cards including credit and debit cards, identification cards, driver's licenses, gift cards, and other plastic cards.

### Background

Plastic cards such as financial cards including credit and debit cards, identification cards, driver's licenses, gift cards, and other plastic cards may be personalized with personal information of the intended card holder. Examples of personalization include, but not are limited to, names, addresses, photographs, account numbers, employee numbers, or the like. The personal information may be applied to the card in a number of different ways including, but not limited to, printing on a surface of the document, storing the information on a magnetic stripe disposed on the card, and storing the information on an integrated circuit chip or smart chip embedded in the card.

Card processing systems that personalize plastic cards are utilized by institutions that issue such personalized plastic cards. In some cases, card processing systems can be designed for relatively small scale, individual card personalization in relatively small volumes, for example measured in tens or low hundreds per hour. In these mechanisms, a single document to be personalized is input into a card processing system, which typically includes one or two processing capabilities, such as printing and laminating. These processing machines are often termed desktop processing machines because they have a relatively small footprint intended to permit the processing machine to reside on a desktop. Many examples of desktop processing machines are known, such as the SD or CD family of desktop card printers available from Entrust Datacard Corporation of Shakopee, Minnesota. Other examples of desktop processing machines are disclosed in US Patents 7,434,728 and 7,398,972.

For large volume batch production of personalized cards (for example, on the order of high hundreds or thousands per hour), institutions often utilize card processing systems that employ multiple processing stations or modules to process multiple cards at the same time to reduce the overall per card processing time. Examples of such machines include the MX and MPR family of central issuance processing machines available from Entrust Datacard Corporation of Shakopee, Minnesota. Other examples of central issuance processing machines are disclosed in U.S. Patents 4,825,054, 5,266,781, 6,783,067, and 6,902,107.

EP 0 835 739 A2 shows a coating system that enables protective coating on both the recording surfaces of a recording medium such as identification cards, license cards, and credit cards by use of a single coating unit capable of coating only one surface of the card-like recording medium. Upon coating one recording surface of the medium with protective films at a coating position, the recording medium is turned over by operating transporting-turning means and again sent to the coating position, so that the other surface is coated there. The system may incorporate a printing unit for printing the recording medium or be attached to an individual printer.

US 2014/063086 A1 shows a graphic printing machine and method for a card-type storage medium, in particular plastic or cardboard or paper cards. The machine employs a jet printing head and a controller to perform ink jet printing on the medium.

### Summary

The invention is set out in the appended set of claims.

Card processing mechanisms, systems and methods are described whereby after a card has been processed on one surface thereof at a card processing station such as, but not limited to, a card printing mechanism, the card can be recirculated back upstream of the card processing station along a return card travel path that is separate from the primary card travel path through the card processing station where the card can then be reintroduced back into the primary card travel path and transported through the card processing station a second time. As the card is being returned along the return card travel path, the card can be flipped over so that when the card is transported back through the card processing station, the opposite surface of the card can be processed.

Processing as used herein is intended to encompass any processing operation on a card surface including, but not limited to, printing, laminating, indenting, embossing, and other processing operations. In one embodiment, the card processing station is configured to perform a printing operation. Printing can include drop-on-demand printing with an ultra-violet (UV) curable ink, printing using a thermal dye transfer ribbon, laser marking using a laser, retransfer printing, and other card printing techniques.

In some embodiments, improved card processing systems include a card printing mechanism having a primary card path and a separate return card path. The return card path allows a card that has been fed through a print station to be returned back to the primary card path at a portion upstream of the print station so that the card can be fed again through the print station. One or more card reorienting mechanisms (e.g., flippers) can be located on the return card path to orient the card into a desired position for the second pass through the print station. In some embodiments, the card reorienting mechanism positions the card so that the same surface of the card that was processed during the first pass through the print station can be processed during the second pass through the print station. In other embodiments, the card reorienting mechanism can position the card so that the opposite side of the card can be processed during the second pass through the print station. The card return path can have any general shape as long as it functions to efficiently return cards to the print station for a second pass through the print station. In some embodiments, the return card path can be on substantially the same plane as the primary card path. Alternatively, the return card path can be located on a plane that is above or below the plane of the primary card path. In systems that employ a module or component upstream and/or downstream of the card printing mechanism that has a lower maximum card processing rate, the use of a return card path allows the card printing mechanism to process cards at a higher rate and can eliminate the need for a second card printing mechanism, which reduces the cost and footprint of the system.

In one embodiment, a method of processing cards in a card processing system that includes a card printing mechanism with a print station includes printing on a first side of a first card in the card processing system using the print station of the card printing mechanism. After printing on the first side of the first card, a second side of a second card within the card processing system is printed on using the print station, where the second card includes printing on a first side thereof that was previously applied to the first side thereof using the print station. In addition, after printing on the second side of the second card, printing on a second side of the first card is performed using the print station. In another embodiment, after printing on the first side of the first card and before printing on the second side of the first card, a first side or a second side of a plurality of cards in addition to the second card can be printed on using the print station.

In one embodiment, the card processing station with the return card travel path can process cards at a card rate that is higher, for example up to twice as high, than a card processing rate of card processing stations immediately upstream and/or downstream of the card processing station.

In another embodiment, the card processing system can be configured such that a card can travel through the card processing system in a first orientation, for example vertical relative to the ground. However, upon reaching a card processing station, for example the card processing station with the return card travel path, the card can be rotated 90 degrees to a second orientation, for example horizontal relative to the ground, for processing within the card processing station. After processing in the card processing station is finished, the card can be rotated back to the first orientation if necessary for further processing downstream of the card processing station.

The card processing mechanisms and methods described herein can be used in large volume, batch production or central issuance card processing systems as well as lower volume, desktop card processing systems.

### Drawings

Figure 1 schematically illustrates an embodiment of a card processing system that can utilize the card printing mechanism described herein.
Figure 2 illustrates an example of a sequence of cards progressing through the card printing mechanism described herein.
Figure 3 illustrates a sequence similar to Figure 2 but with the cards advanced one position.
Figure 4 illustrates a sequence similar to Figure 3 but with the cards advanced another position.
Figure 5 is a perspective view of a portion of an example card printing mechanism showing mechanisms for rotating the cards from one orientation to another.

### Detailed Description

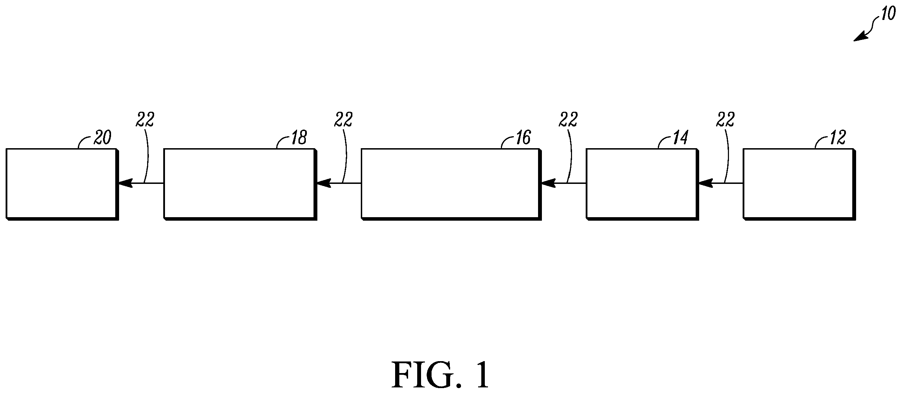

Figure 1 illustrates an embodiment of a card processing system 10 that is configured to personalize and otherwise process plastic cards such as financial cards including credit and debit cards, identification cards, driver's licenses, gift cards, and other plastic cards. The personal information may also be referred to as variable data since the data varies from card to card. Examples of personal information include, but not are limited to, names, addresses, photographs, account numbers, employee numbers, or the like. Non-personal, or non-variable, data such as corporate logos, printed backgrounds, and the like may also be applied to the cards. The personal and non-personal information may be applied to a card in the system 10 in a number of different ways including, but not limited to, printing on a surface of the card, storing the information on a magnetic stripe disposed on the card, and storing the information on an integrated circuit chip or smart chip embedded in the card.

In the example illustrated in Figure 1, the system 10 can include a card feed mechanism 12, a card processing mechanism 14, a card printing mechanism 16 that can also be referred to as a card processing mechanism, another card processing mechanism 18, and a card output 20 into which processed cards are output. The card processing system 10 illustrated in Figure 1 is a large volume, batch production or central issuance card processing system. However, the card printing mechanism 16 described herein can be used in other card processing systems including in lower volume, desktop card processing systems.

The mechanisms 14, 16, 18 can be arranged in any order in the system 10. In addition, not all of the mechanisms 14, 16, 18 need to be utilized. For example, in one embodiment, the mechanism 16 can be used by itself without the other mechanisms 14, 18. In addition, additional card processing mechanisms can be utilized with the mechanisms 14, 16, 18.

The card feed mechanism 12 feeds cards to be processed by the system 10 onto a card processing path 22 at up to a first card rate. The card rate of the feed mechanism 12 refers to how fast the mechanism 12 can feed cards one by one into the processing path 22. In one embodiment, the first card rate can be up to about 3000 cards per hour. The card feed mechanism 12 can include one or more card hoppers containing cards waiting to be fed one-by-one onto the card processing path 22.

The card processing mechanism 16 is disposed on and along the card processing path 22 to receive cards. The card processing mechanism 16 is configured to perform a processing operation on each card. In one embodiment, the card processing mechanism 16 is configured to perform printing. Examples of printing include drop-on-demand printing with a UV curable ink, printing using a thermal dye transfer ribbon, retransfer printing, laser marking using a laser, and other card printing techniques.

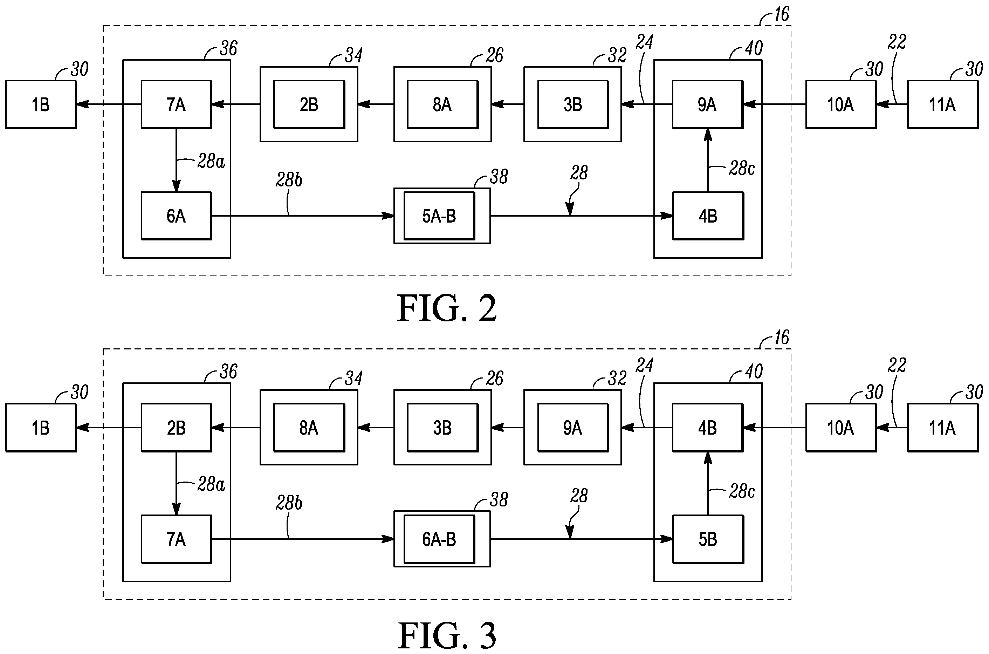

As discussed in further detail below with respect to Figures 2-4, when the card processing mechanism 16 is configured to perform printing, the processing mechanism 16 can be referred to as a card printing mechanism that has a primary card travel path 24 that is collinear with the card processing path 22, at least one print station 26 on the primary card travel path 24 that performs a printing operation on a surface of a card on the primary card travel path 24, and a return card travel path 28 that returns a card to a location on the primary card travel path 24 that is upstream of the at least one print station 26 after the card has been printed on by the at least one print station 26. When configured as a card printing mechanism, the card processing mechanism 16 can process cards at up to a card rate that is greater than the first card rate. For example, the mechanism 16 can have a second card rate of up to about 6000 cards per hour or more. The card rate of the card processing mechanism 16 refers to how fast (i.e. the rate) the card processing mechanism 16 can perform its intended processing operation(s) on the cards.

Returning to Figure 1, in the illustrated example, the card processing mechanism 14 is disposed on and along the card processing path 22 downstream of the card feed mechanism 12. The card processing mechanism 14 is configured to perform one or more processing operations on each card at up to the first card rate, for example up to about 3000 cards per hour. The card rate of the card processing mechanism 14 refers to how fast (i.e. the rate) the card processing mechanism 14 can perform its intended processing operation(s) on the cards. The card processing mechanism 14 can be a smart card programming mechanism that is configured to, for example, program a chip embedded in each card. The smart card programming mechanism can be configured to program one card at a time. Alternatively, the smart card programming mechanism can be configured to simultaneously program multiple cards. Example of a smart card programming mechanisms that simultaneously program multiple cards that could be utilized are described in U.S. Patent 6695205 (disclosing an elevator-type smart card programming mechanism) and U.S. Patent 5943238 (disclosing a barrel-type smart card programming mechanism), . The card processing mechanism 14 may alternatively be configured to program a magnetic stripe on each card, or the card processing mechanism 14 can perform both smart card programming and magnetic stripe programming. In another embodiment, a separate magnetic stripe programming mechanism (not illustrated) can be located between the card processing mechanism 14 and the card feed mechanism 12 or between the card processing mechanism 14 and the card processing mechanism 16. In addition, the card processing mechanism 14 can be located at other positions in the system 10 or is not used, in which case the card processing mechanism 14 is not between the card processing mechanism 16 and the card feed mechanism 12. The card processing mechanism 14, for example when configured as a smart card programming mechanism, can also be located downstream of the card processing mechanism 16.

In the embodiment illustrated in Figure 1, the card processing mechanism 16 is shown as being downstream of the card processing mechanism 14. In another embodiment, the card processing mechanism 16 can be the first processing mechanism downstream from the card feed mechanism 12 in which case the card processing mechanism 16 is not downstream of the card processing mechanism 14. The card processing mechanism 16 is configured to perform a processing operation on each card that is different than the card processing operation performed by the card processing mechanism 14.

The embodiment illustrated in Figure 1 also shows the card processing mechanism 18 as being disposed along the card processing path 22 downstream of the card processing mechanism 16. However, other locations of the card processing mechanism 18 in the system 10 are possible. The card processing mechanism 18 is configured to perform a processing operation on each card that is different than the card processing operations performed by the card processing mechanism 14 and by the card processing mechanism 16. For example, the card processing mechanism 18 can be configured to perform laser marking on each card using a laser, and/or apply a hologram overlay onto each card, and/or perform other card processing operations. In one embodiment, the card processing mechanism 18 can have a card processing rate that is approximately equal to the first card rate. The card rate of the card processing mechanism 18 refers to how fast (i.e. the rate) the card processing mechanism 18 can perform its intended processing operation(s) on the cards.

Cards that have been processed are collected in the card output 20 that is disposed along the card processing path 22 downstream of the card processing mechanism 16. The processed cards can then be distributed to their intended recipients, for example by attaching the cards to mailer forms and mailing to the intended recipients.

Many other card processing mechanisms can be used in addition to, or in place of, the processing mechanisms illustrated in Figure 1. For example, an indent mechanism that performs indenting on each card can be provided upstream of or downstream of the card processing mechanism 16. A quality assurance mechanism that checks the quality of the processed cards can be located between the card output 20 and the card processing mechanism 18. Many other processing mechanisms, and combinations of processing mechanisms, can be utilized.

Referring now to Figures 2-4, for sake of convenience, the card processing mechanism 16 will be described as a card printing mechanism that is configured to perform printing, in particular drop-on-demand printing with a UV curable ink. Suitable drop-on-demand printing mechanisms that could be utilized are sold under the tradename PERSOMASTER by Atlantic Zeiser GmbH of Emmingen, Germany. Figures 2-4 illustrate a number of different cards 30 at different locations upstream of, downstream of, and within the mechanism 16. Each card 30 is numbered to help described an example sequencing of cards. In addition, the letter "A" on a card 30 indicates one side of the card 30, while the letter "B" indicates the opposite side of the card 30.

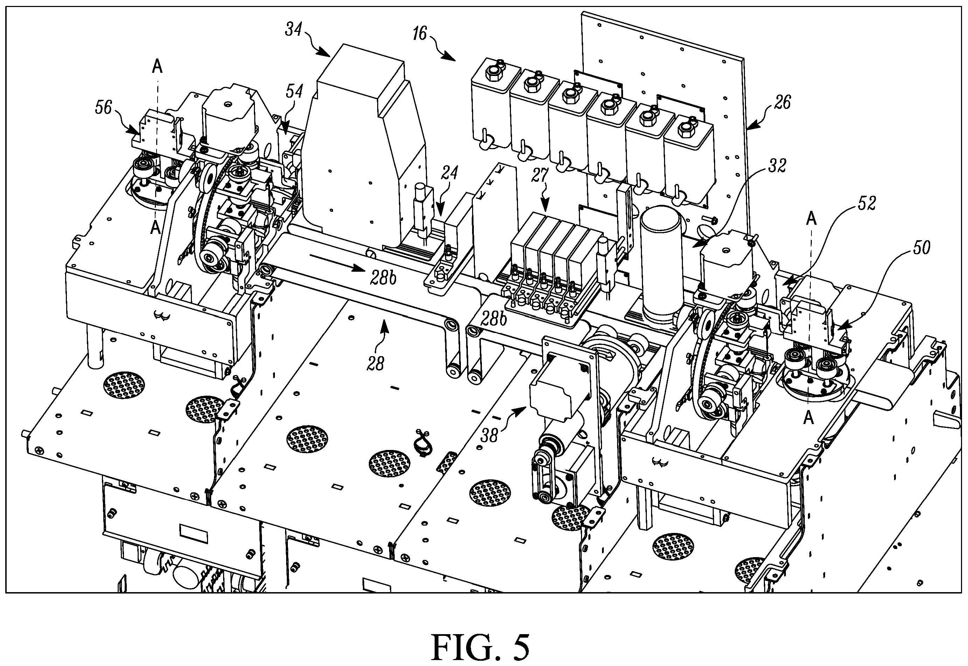

The mechanism 16 includes the at least one print station 26 on the primary card travel path 24 that performs a printing operation on surface A or B of each card 30 on the primary card travel path 24. The print station 26 can include a plurality of print heads 27 (shown in Figure 5), some of which print a different color. Optionally, at least one of the print heads 27 can apply a spray coating onto the card surface A or B. In the case of drop-on-demand printing with a UV curable ink, an optional surface treatment station 32 can be located on the primary card travel path 24 upstream of the print station 26. The optional surface treatment station 32, if used, is configured to treat the surface A or B of each card 30 in order to lower the surface tension of the card surface so that the UV ink stays in place better when applied to the card surface. In addition, a UV curing station 34 can be located on the primary card travel path 24 downstream of the print station 26. The UV curing station 34 is configured to apply UV light to the card surface in order to cure the applied UV ink.

The return card travel path 28 intersects the primary card travel path 24 both downstream of and upstream of the print station 26. The return card travel path 28 is configured to divert or recirculate a card that has been fed through the print station 26 from the primary card travel path 24 and return the card back to the primary card travel path 24 at a location upstream of the print station 26 so that the card can again be fed through the print station 26. In addition, in some embodiments, as the card is being recirculated along the return card travel path 28, the card can be flipped 180 degrees so that the surface A or B that was previously printed on is now facing downward and the non-printed surface A or B is facing upward ready to be printed on.

The return card travel path 28 can have any configuration and location that is suitable for recirculating the cards upstream of the print station 26 so they can fed through the print station 26 a second time, or even more than two times. The card return travel path 28 can have any general shape as long as it functions to efficiently return cards to the primary card travel path 24 upstream of the print station for a second pass through the print station 26. In some embodiments, the return card travel path 28 can be on substantially the same plane as the primary card path 24. Alternatively, the return card travel path 28 can be located on a plane that is above or below the plane of the primary card travel path 24. In addition, the return card travel path 28 can be substantially linear or it can be curved. In addition, any mechanism(s) for selectively recirculating the cards along the return card travel path 28 and optionally flipping the cards 180 degrees can be used.

For example, in the embodiment illustrated in Figures 2-4, the card travel path 28 can include a first portion 28a that is substantially perpendicular to the primary card travel path 24, a horizontal portion 28b that is substantially parallel to the primary card travel path 24, and a second portion 28c that is substantially perpendicular to the primary card travel path 24. The mechanism 16 can include a first mechanism 36 that can transport a card along the first portion 28a between the primary card travel path 24 and the horizontal portion 28b so as to bring a card from the travel path 24 to the horizontal portion 28b of the travel path 28. A card flipper 38 can be provided along the horizontal portion 28b of the travel path 28 which flips a card 180 degrees. This is evident from Figures 2-3 where card (6) is about to enter the card flipper 38 with side A facing up in Figure 2, and in Figure 3 card (6) enters the card flipper 38 which flips the card (6) so that its side B is now facing up. A second mechanism 40 is also provided that can transport a card along the second portion 28c between the primary card travel path 24 and the horizontal portion 28b of the return card travel path 28 so as to bring a card from the horizontal portion 28b to the travel path 24.

The mechanisms 36, 40 can have any configuration that can suitably transport the cards between the primary card travel path 24 and the portion 28a of the return card travel path 28. For example, as discussed further below in Figure 5, the mechanisms 36, 40 can be rotation mechanisms that rotate each card from the primary card travel path 24 to the portion 28a of the return card travel path 28 (in the case of the mechanism 36), and from the portion 28a of the return card travel path 28 back to the primary card travel path 24 (in the case of the mechanism 40).

**In** other embodiments, the mechanisms 36, 40 can be elevator mechanisms that transport the cards between the card travel paths. An example of a card elevator mechanism is disclosed in U.S. Patent 6105493 . In other embodiments, a sequence of card flippers can be used to transport cards between the card travel paths. Examples of card flippers are disclosed in U.S. Published Application No. 2013/0220984 and U.S. Patent 7,398,972

Referring to Figure 2, a sequence of cards 30 as they progress through the mechanism 16 is illustrated at an arbitrary moment in time. This example will described as using the optional surface treatment station 32. If the surface treatment station 32 is not used, a similar card sequencing can occur but with one less card within the mechanism 16. Card (1) is shown as output from the mechanism 16 with side B facing upward. Card (7) is shown in position at the mechanism 36 with side A facing up ready to be transported to the portion 28b of the card travel path 28. Card (6) is shown after having been transported to the portion 28b of the travel path 28, with side A facing up and ready to enter the flipper 38. Card (5) is shown in the flipper 38 and being flipped from side A to side B so that side B is now facing up. Card (4) is shown with card side B facing up and ready to be brought by the mechanism 40 back to the primary card travel path 24. Card (9) is shown with card side A facing up and having just entered the mechanism 16. Card (3) is shown in the surface treatment station 32 with card side B facing up after having been recirculated back to the travel path 24 so that side B can be treated prior to printing. Card (8) is shown in the print station 26 with side A facing upward for printing on side A by the print station 26. Card (2) is shown in the UV curing station 34 with side B facing up after having been printed on, with the UV curable ink being UV cured in the station 34. Card (10) is shown with side A facing upward and ready to enter the mechanism 16. Card (11) is shown with side A facing upward and ready to take the position of card (10) once card (10) enters the mechanism 16.

Figure 3 shows the cards of Figure 2 advanced one step in an example of one possible sequencing of the cards in Figure 2. Card (1) has not advanced and is shown in the same position output from the mechanism 16 with side B facing upward. Card (7) with side A facing upward has been transported by the mechanism 36 to the portion 28b of the card travel path 28. Card (6) has been advanced along the card travel path portion 28b into the flipper 38 and flipped from side A to side B so that side B now faces upward. Card (5) with side B facing upward has been advanced from the flipper 38 into the mechanism 40 ready to be transported back to the primary card travel path 24. Card (4) with side B facing upward has been transported by the mechanism 40 back to the primary card travel path 24. Card (9) with side A facing upward has been advanced into the surface treatment station 32 so that side A can be treated prior to printing. Card (3) with side B facing upward has been advanced into the print station 26 for printing on side B. Card (8) with side A facing upward has been advanced into the UV curing station 34 after having been printed on, with the UV curable ink being UV cured in the station 34. Card (2) with side B facing upward has been advanced to the elevator mechanism 36 and the position formerly occupied by card (7).

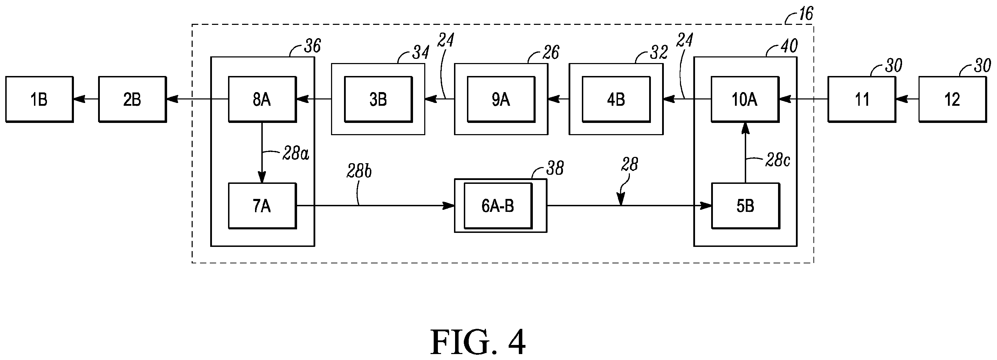

Figure 4 shows the cards of Figure 3 advanced another step in an example of one possible sequencing of the cards from Figure 3. In this example, card (1) is advanced and card (2) is advanced from the mechanism 16 into the position formerly occupied by card (1). Cards (7), (6) and (5) remain in position. Card (8) is advanced from the UV curing station 34 into the position formerly occupied by card (2). Card (3) is advanced into the UV curing station 34. Card (9) is advanced into the print station 26 for printing on side A. Card (4) is advanced into the surface treatment station 32 so that side B can be treated prior to printing. Card (10) is advanced into the mechanism 16 into the position formerly occupied by card (4) with side A facing upward. In addition, card (11) is advanced into the position formerly occupied by card (10) and card (12) is advanced into the position formerly occupied by card (11).

Once a card reaches the mechanism 36, if no further printing is required on the card, the card can be advanced through the mechanism 36 and out of the mechanism 16. At the same time, if a card is advanced out of the mechanism 16, a new card can be transported into the mechanism 16 via the mechanism 40 to begin the process of printing on a surface of the new card. After a surface of the new card is printed, it can be recirculated back upstream of the print station 26 along the return card travel path 28 and flipped so that the other side of the new card faces upward, so that printing can occur on the other side of the new card.

If printing on both sides A and B of the card is not required, the card can be passed a single time through the print station 26 and then output from the mechanism 16 without recirculating the card through the return card travel path 28.

A method of processing cards in the card processing system 10 that results from the example system 10 and the example sequencing illustrated in Figures 2-4 includes printing on a first side (such as side A) of a first card, for example card 8, using the print station 26. See Figure 2. Thereafter, a second side (such as side B) of a second card, for example card 3, is printed on using the print station 26. See Figure 3. The second card, for example card 3, includes printing on a first side (such as side A) thereof that was previously applied to the first side thereof using the print station 26. In other words, the second card, for example card 3, was previously transported through the print station 26 which printed on side A, with the second card, for example card 3, ultimately being recirculated back upstream of the print station and ultimately fed back through the print station 26 to print on side B as illustrated in Figure 3. In addition, after printing on the second side of the second card, for example card 3, the second side (such as side B) of the first card, for example card 8, is printed on in the print station 26 as a result of the first card, such as card 8, ultimately being recirculated back upstream of the print station 26 and ultimately fed back through the print station 26 to print on side B using whichever card sequencing is being implemented.

As is apparent from Figures 2-4, after printing on the first side of the first card, for example card 8, the side A or the side B of at least one additional card is printed on before printing occurs on the second side of the first card, for example card 8. The printing on the additional card(s) occurs as the first card, for example card 8, is being recirculated back for printing on the second side thereof in the print station 26. One additional card, two additional cards, three additional cards, four additional cards, five additional cards, or more than five additional cards, can be printed on as the first card, for example card 8, is being recirculated back for printing on the second side thereof.

With drop-on-demand printing, it is preferable that the card being printed on in the print station 26 is oriented such that the card is oriented substantially flat or horizontal relative to the ground. However, in some card processing systems, cards may be transported along the card processing path 22 in a second orientation where the cards are oriented substantially vertically relative to the ground. Therefore, in such an embodiment, upon reaching the mechanism 16, the cards need to be reoriented by rotating the cards 90 degrees, for example from a vertical orientation to a horizontal orientation, and upon exiting the mechanism 16, the cards may need to be reoriented by rotating the cards 90 degrees, for example from the horizontal orientation back to the vertical orientation.

Figure 5 shows a portion of an embodiment of the mechanism 16 that is configured to reorient the cards 90 degrees at both the entrance and the exit of the mechanism 16. In this example, cards enter the mechanism 16 in a vertical orientation. The mechanism 16 in Figure 5 also has the primary card travel path 24 and the portion 28b of the return card travel path 28 is located next to and in the same plane as the primary card travel path 24.

The cards can initially enter the mechanism 16 into an optional input roller mechanism 50. The mechanism 50 can rotate about a vertical axis A-A. The mechanism 50 is useful for, if necessary, flipping the cards about the axis A-A so that if side A of a card is facing forward upon entry into the mechanism 16, the mechanism 50 can rotate the card so that side B faces forward. If flipping of a card is not required, the card can simply pass through the mechanism 50 without being flipped about the axis A-A.

Each vertically oriented card is then fed into a first rotation mechanism 52. The rotation mechanism 52 is configured to receive each card, and then rotate in either direction about an axis that is substantially parallel to the primary card travel path 24 to rotate the card from its vertical orientation to a horizontal orientation that is aligned with the primary card travel path 24. The now horizontal card can then be transported from the mechanism 52 and onto the primary card travel path 24. The mechanism 52 can rotate 90 degrees in either direction to bring the now horizontal card into alignment with the primary card travel path 24. The mechanism 52 is also configured to receive a card from the portion 28b of the return card travel path 28 and rotate 180 degrees along with the card about the axis that is substantially parallel to the primary card travel path 24 to bring the card back to the primary card travel path 24.

The now horizontal card is then transported past the print head(s) 27 of the print station 26 for printing on whichever surface is facing upwardly toward the print head(s) 27. Once printing is complete, the card is fed into the UV curing station 34. After curing, the card is fed into a second rotation mechanism 54 near the output of the mechanism 16. The rotation mechanism 54 is configured to receive each card, and then rotate in either direction about an axis that is substantially parallel to the primary card travel path 24 to transport the horizontally oriented card from the primary card travel path 24 to the portion 28b of the return card travel path 28. In one embodiment, the rotation mechanism 54 rotates 180 degrees to transport the card from the primary card travel path 24 to the portion 28b of the return card travel path 28 with the card still in its horizontal orientation. The card can then be transported along the portion 28b of the card travel path 28 to the flipper 38 which can flip the card (if necessary) so that the appropriate side faces upward. The card is then transported into the first rotation mechanism 52 which rotates to transport the can back to the primary card travel path 24.

An optional output roller mechanism 56 can be provided adjacent to the output of the mechanism 16. The mechanism 56 is similar in construction and operation to the mechanism 50 in that the mechanism 56 can rotate about a vertical axis A-A. The mechanism 56 is useful for, if necessary, flipping the cards about the axis A-A so that if side A of a card is facing forward as it is about the exit the mechanism 16, the mechanism 56 can rotate the card so that side B faces forward. If flipping of a card is not required, the card can simply pass through the mechanism 56 without being flipped about the axis A-A.

The techniques described herein can be used with printing other than drop-on-demand printing. For example, in the case of thermal dye diffusion printing, if printing is required on both sides A and B of the card, the card can be recirculated back to the thermal dye diffusion printhead. In the case of thermal dye diffusion printing, the stations 32, 34 in Figures 2-4 would not be required, and reorienting the cards from vertical to horizontal and from horizontal back to vertical would not be required thereby eliminating the need for the rotation mechanisms 52, 54.

The cards can be transported along the primary card travel path 24 and the portion 28b of the return card travel path 28, as well as along the card processing path 22 through the mechanisms 14, 18 using any card transport mechanisms that are well understood by people of ordinary skill in the art. For example, the cards can be transported using rollers, belts, and combinations thereof.

The mechanisms 12, 14 and 18 have been described as having card rates approximately equal to one another (for example each up to about 300 cards per hour), and the mechanism 16 has been described as having a card rate (for example up to about 6000 cards per hour or even greater) that is greater than the card rates of the mechanisms 12, 14, 18. However, the mechanisms 12, 14, 16 and 18 can have card rates that are approximately equal to one another.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A card processing system (10) for processing plastic cards (30),
the card processing system (10) comprising:
- a card processing path (22);
- a card feed mechanism (12) that feeds plastic cards (30) to be processed onto the card processing path (22), the card feed mechanism (12) includes one or more card hoppers containing plastic cards (30) waiting to be fed one-by-one onto the card processing path (22);
- a card printing mechanism (16) disposed along the card processing path (22) downstream of the card feed mechanism (12), the card printing mechanism (16) includes:
- a primary card travel path (24) along which plastic cards (30) can travel in a downstream direction;
- at least one print station (26) on the primary card travel path (24) that performs a printing operation on a surface of a plastic card (30) on the primary card travel path (24);
**characterized in that**
the card printing mechanism (16) further includes:
- a return card travel path (28) that intersects the primary card travel path (24) downstream and upstream of the at least one print station (26), the return card travel path (28) being configured to divert a plastic card (30) that has been fed through the at least one print station (26) and has been printed on a first side from the primary card travel path (24) and return the plastic card (30) back to the primary card travel path (24) at a location upstream of the at least one print station (26) to feed the plastic card (30) again through the at least one print station (26),
wherein the card printing mechanism (16) is configured such that at least one additional plastic card (30) is printed on in the at least one print station (26) as a first plastic card (30) is being recirculated on the return card travel path (28) to be fed again through the at least one print station (26).

2. The card processing system (10) of claim 1,
wherein the card printing mechanism (16) is configured such that two additional cards, three additional cards, four additional cards, five additional cards, or more than five additional cards are printed on in the at least one print station (26) as the first plastic card (30) is being recirculated.

3. The card processing system (10) of claim 1 or 2,
wherein the card printing mechanism (16) is configured to recirculate the plastic card (30) on the return card travel path (28) such that the plastic card (30) is returned to the primary card travel path (24) at a position downstream of the card feed mechanism (12) and upstream of the at least one print station (26).

4. The card processing system (10) of one of the preceding claims,
further comprising a mechanism for selectively recirculating plastic cards (30) along the return card travel path (28).

5. The card processing system (10) of one of the preceding claims,
wherein the card processing system (10) is adapted to transport the plastic cards (30) along the primary card travel path (24) and a portion (28b) of the return card travel path (28) using rollers, belts, and combinations thereof.

6. The card processing system (10) of one of the preceding claims,
wherein the return card travel path (28) is located on a plane above the primary card travel path (24).

7. The card processing system (10) of one of the preceding claims,
wherein the card processing system (10) is adapted to flip the plastic cards (30) 180 degrees as the plastic cards (30) are being transported to the location upstream of the at least one print station (26), wherein each plastic card (30) is flipped such that the side that was previously printed on is facing downward and the non-printed side is facing upward.

8. The card processing system (10) of one of the preceding claims,
comprising a first transport mechanism (36) and a second transport mechanism (40) for transporting plastic cards (30) between the primary card travel path (24) and a portion of the return card travel path (28).

9. The card processing system (10) of claim 8,
wherein the first transport mechanism (36) is located downstream of the at least one print station (26) and the second transport mechanism (40) is located upstream of the at least one print station (26).

10. The card processing system (10) of claim 8 or 9,
wherein the first and the second transport mechanism (36, 40) are elevator mechanisms.

11. The card processing system (10) of claim 8 or 9,
wherein the first and the second transport mechanism (36, 40) are rotation mechanisms.

12. The card processing system (10) of one of the claims 8 to 11,
wherein the processing system (10) is adapted such that
a) once a plastic card (30) reaches the first transport mechanism (36), if no further printing is required on that plastic card (30), the plastic card (30) is advanced through the first transport mechanism (36) and out of the card printing mechanism (16); and
b) at the same time, as the plastic card (30) advances out of the printing mechanism (16) a new plastic card (30) is transported into the card printing mechanism (16) via the second transport mechanism (40).

13. The card processing system (10) of one of the preceding claims, further comprising a card processing mechanism (18) located downstream of the card printing mechanism (16) and receiving plastic cards (30) therefrom, and a card output (20) located downstream of the card processing mechanism (18) into which processed plastic cards (30) are output.

14. The card processing system (10) of claim 13,
wherein the card processing system (10) further comprises a quality assurance mechanism located between the card output (20) and the card processing mechanism (18).

15. The card processing system (10) of one of the preceding claims,
wherein the at least one print station (26) is configured to perform drop-on-demand printing using UV curable ink; and
wherein the card printing mechanism (16) further includes a surface treatment station (32) upstream of the at least one print station (26) and a UV curing station (34) downstream of the at least one print station (26).

16. A method of processing plastic cards (30) in a card processing system (10) that includes a card printing mechanism (16) with a print station (26), the method comprising:
- printing on a first side of a first plastic card in the card processing system (10) using the print station (26) of the card printing mechanism (16);
- after printing on the first side of the first plastic card, discharging the first plastic card from the print station (26) to a location downstream of the print station (26) and thereafter transporting the first plastic card to a location upstream of the print station (26) without passing through the print station (26);
- after printing on the first side of the first plastic card, printing on a second side of a second plastic card in the card processing system (10) using the print station (26) while the first plastic card is being recirculated back,
wherein the second plastic card includes printing on a first side thereof that was previously applied to the first side thereof using the print station (26);
- after printing on the second side of the second plastic card, printing on a second side of the first plastic card using the print station (26).

17. The method of claim 16, further comprising, after printing on the first side of the first plastic card and before printing on the second side of the first plastic card, printing on one of a first side or a second side of a plurality of plastic cards in addition to the second plastic card using the print station (26).

## Patentansprüche

1. Kartenverarbeitungssystem (10) zum Verarbeiten von Kunststoffkarten (30),
wobei das Kartenverarbeitungssystem (10) das Folgende aufweist:
- einen Kartenverarbeitungsweg (22);
- einen Kartenzufuhrmechanismus (12), der zu verarbeitende Kunststoffkarten (30) auf den Kartenverarbeitungsweg (22) zuführt, wobei der Kartenzufuhrmechanismus (12) ein oder mehrere Kartenmagazine aufweist, die Kunststoffkarten (30) enthalten, die darauf warten, einzeln auf den Kartenverarbeitungsweg (22) zugeführt zu werden;
- einen Kartendruckmechanismus (16), der entlang des Kartenverarbeitungswegs (22) stromabwärts des Kartenzufuhrmechanismus (12) angeordnet ist, wobei der Kartendruckmechanismus (16) das Folgende aufweist:
- einen primären Kartenbewegungsweg (24), entlang dessen sich Kunststoffkarten (30) in einer stromabwärtigen Richtung bewegen können;
- mindestens eine Druckstation (26) auf dem primären Kartenbewegungsweg (24), die einen Druckvorgang an einer Oberfläche einer Kunststoffkarte (30) auf dem primären Kartenbewegungsweg (24) durchführt;
**dadurch gekennzeichnet, dass**
der Kartendruckmechanismus (16) ferner aufweist:
- einen Karten-Rückführbewegungsweg (28), der den primären Kartenbewegungsweg (24) stromabwärts und stromaufwärts der mindestens einen Druckstation (26) schneidet, wobei der Karten-Rückführbewegungsweg (28) dazu konfiguriert ist, eine Kunststoffkarte (30), die durch die mindestens eine Druckstation (26) geführt wurde und auf einer ersten Seite bedruckt wurde, vom primären Kartenbewegungsweg (24) abzulenken und die Kunststoffkarte (30) an eine Stelle stromaufwärts der mindestens einen Druckstation (26) zurück auf den primären Kartenbewegungsweg (24) zu führen, um die Kunststoffkarte (30) erneut durch die mindestens eine Druckstation (26) zu führen,
wobei der Kartendruckmechanismus (16) so konfiguriert ist, dass mindestens eine zusätzliche Kunststoffkarte (30) in der mindestens einen Druckstation (26) bedruckt wird, während eine erste Kunststoffkarte (30) auf dem Karten-Rückführbewegungsweg (28) rezirkuliert wird, um erneut durch die mindestens eine Druckstation (26) geführt zu werden.

2. Kartenverarbeitungssystem (10) nach Anspruch 1,
wobei der Kartendruckmechanismus (16) so konfiguriert ist, dass zwei zusätzliche Karten, drei zusätzliche Karten, vier zusätzliche Karten, fünf zusätzliche Karten oder mehr als fünf zusätzliche Karten in der mindestens einen Druckstation (26) bedruckt werden, während die erste Kunststoffkarte (30) rezirkuliert wird.

3. Kartenverarbeitungssystem (10) nach Anspruch 1 oder 2,
wobei der Kartendruckmechanismus (16) dazu konfiguriert ist, die Kunststoffkarte (30) auf dem Karten-Rückführbewegungsweg (28) so zu rezirkulieren, dass die Kunststoffkarte (30) auf den primären Kartenbewegungsweg (24) an einer Position stromabwärts des Kartenzufuhrmechanismus (12) und stromaufwärts der mindestens einen Druckstation (26) zurückgeführt wird.

4. Kartenverarbeitungssystem (10) nach einem der vorstehenden Ansprüche,
das ferner einen Mechanismus zum selektiven Rezirkulieren von Kunststoffkarten (30) entlang des Karten-Rückführbewegungswegs (28) aufweist.

5. Kartenverarbeitungssystem (10) nach einem der vorstehenden Ansprüche,
wobei das Kartenverarbeitungssystem (10) dazu ausgelegt ist, die Kunststoffkarten (30) entlang des primären Kartenbewegungswegs (24) und eines Bereichs (28b) des Karten-Rückführbewegungswegs (28) unter Verwendung von Rollen, Bändern und Kombinationen davon zu transportieren.

6. Kartenverarbeitungssystem (10) nach einem der vorstehenden Ansprüche,
wobei der Karten-Rückführbewegungsweg (28) in einer Ebene oberhalb des primären Kartenbewegungswegs (24) angeordnet ist.

7. Kartenverarbeitungssystem (10) nach einem der vorstehenden Ansprüche,
wobei das Kartenverarbeitungssystem (10) dazu ausgelegt ist, die Kunststoffkarten (30) um 180 Grad zu wenden, während die Kunststoffkarten (30) zu der Stelle stromaufwärts der mindestens einen Druckstation (26) transportiert werden, wobei eine jeweilige Kunststoffkarte (30) so gewendet wird, dass die zuvor bedruckte Seite nach unten zeigt und die unbedruckte Seite nach oben zeigt.

8. Kartenverarbeitungssystem (10) nach einem der vorstehenden Ansprüche,
das einen ersten Transportmechanismus (36) und einen zweiten Transportmechanismus (40) zum Transportieren von Kunststoffkarten (30) zwischen dem primären Kartenbewegungsweg (24) und einem Bereich des Karten-Rückführbewegungswegs (28) aufweist.

9. Kartenverarbeitungssystem (10) nach Anspruch 8,
wobei der erste Transportmechanismus (36) stromabwärts der mindestens einen Druckstation (26) und der zweite Transportmechanismus (40) stromaufwärts der mindestens einen Druckstation (26) angeordnet ist.

10. Kartenverarbeitungssystem (10) nach Anspruch 8 oder 9,
wobei der erste und der zweite Transportmechanismus (36, 40) Aufzugsmechanismen sind.

11. Kartenverarbeitungssystem (10) nach Anspruch 8 oder 9,
wobei der erste und der zweite Transportmechanismus (36, 40) Rotationsmechanismen sind.

12. Kartenverarbeitungssystem (10) nach einem der Ansprüche 8 bis 11,
wobei das Verarbeitungssystem (10) so ausgelegt ist, dass
a) sobald eine Kunststoffkarte (30) den ersten Transportmechanismus (36) erreicht, wenn kein weiteres Bedrucken auf dieser Kunststoffkarte (30) erforderlich ist, die Kunststoffkarte (30) durch den ersten Transportmechanismus (36) hindurchbewegt und aus dem Kartendruckmechanismus (16) herausbefördert wird; und
b) gleichzeitig, während die Kunststoffkarte (30) aus dem Druckmechanismus (16) herausbefördert wird, eine neue Kunststoffkarte (30) über den zweiten Transportmechanismus (40) in den Kartendruckmechanismus (16) hineintransportiert wird.

13. Kartenverarbeitungssystem (10) nach einem der vorstehenden Ansprüche,
das ferner einen Kartenverarbeitungsmechanismus (18), der stromabwärts des Kartendruckmechanismus (16) angeordnet ist und von diesem Kunststoffkarten (30) empfängt, sowie eine Kartenausgabe (20) aufweist, die stromabwärts des Kartenverarbeitungsmechanismus (18) angeordnet ist und in welche verarbeitete Kunststoffkarten (30) ausgegeben werden.

14. Kartenverarbeitungssystem (10) nach Anspruch 13,
wobei das Kartenverarbeitungssystem (10) ferner einen Qualitätssicherungsmechanismus aufweist, der zwischen der Kartenausgabe (20) und dem Kartenverarbeitungsmechanismus (18) angeordnet ist.

15. Kartenverarbeitungssystem (10) nach einem der vorstehenden Ansprüche,
wobei die mindestens eine Druckstation (26) dazu konfiguriert ist, Drop-on-Demand-Druck unter Verwendung von UV-härtbarer Tinte durchzuführen; und
wobei der Kartendruckmechanismus (16) ferner eine Oberflächenbehandlungsstation (32) stromaufwärts der mindestens einen Druckstation (26) und eine UV-Härtungsstation (34) stromabwärts der mindestens einen Druckstation (26) aufweist.

16. Verfahren zum Verarbeiten von Kunststoffkarten (30) in einem Kartenverarbeitungssystem (10), das einen Kartendruckmechanismus (16) mit einer Druckstation (26) aufweist, wobei das Verfahren umfasst:
- Bedrucken einer ersten Seite einer ersten Kunststoffkarte in dem Kartenverarbeitungssystem (10) unter Verwendung der Druckstation (26) des Kartendruckmechanismus (16);
- nach dem Bedrucken der ersten Seite der ersten Kunststoffkarte, Hinausführen der ersten Kunststoffkarte aus der Druckstation (26) an eine Stelle stromabwärts der Druckstation (26) und anschließendes Transportieren der ersten Kunststoffkarte an eine Stelle stromaufwärts der Druckstation (26), ohne Durchlaufen der Druckstation (26);
- nach dem Bedrucken der ersten Seite der ersten Kunststoffkarte, Bedrucken einer zweiten Seite einer zweiten Kunststoffkarte im Kartenverarbeitungssystem (10) unter Verwendung der Druckstation (26), während die erste Kunststoffkarte rezirkuliert wird,
wobei die zweite Kunststoffkarte auf ihrer ersten Seite einen Aufdruck aufweist, der zuvor auf deren erste Seite unter Verwendung der Druckstation (26) aufgebracht wurde;
- nach dem Bedrucken der zweiten Seite der zweiten Kunststoffkarte, Bedrucken einer zweiten Seite der ersten Kunststoffkarte unter Verwendung der Druckstation (26).

17. Verfahren nach Anspruch 16, das ferner ein Bedrucken einer ersten oder zweiten Seite von einer Vielzahl von Kunststoffkarten unter Verwendung der Druckstation (26) umfasst, und zwar nach dem Bedrucken der ersten Seite der ersten Kunststoffkarte und vor dem Bedrucken der zweiten Seite der ersten Kunststoffkarte, zusätzlich zur zweiten Kunststoffkarte.

## Revendications

1. Système de traitement de cartes (10) pour traiter des cartes plastiques (30),
le système de traitement de cartes (10) comprenant :
- un trajet de traitement de cartes (22) ;
- un mécanisme d'acheminement de cartes (12) qui achemine des cartes plastiques (30) à traiter vers le trajet de traitement de cartes (22), le mécanisme d'acheminement de cartes (12) inclut un ou plusieurs magasins d'alimentation de cartes contenant des cartes plastiques (30) en attente d'être acheminées une par une vers le trajet de traitement de cartes (22) ;
- un mécanisme d'impression de cartes (16) disposé le long du trajet de traitement de cartes (22) en aval du mécanisme d'acheminement de cartes (12), le mécanisme d'impression de cartes (16) inclut :
- un trajet principal de déplacement de cartes (24) le long duquel des cartes plastiques (30) peuvent se déplacer dans une direction aval ;
- au moins un poste d'impression (26) sur le trajet principal de déplacement de cartes (24), qui effectue une opération d'impression sur une surface d'une carte plastique (30) sur le trajet principal de déplacement de cartes (24) ;
**caractérisé en ce que**
le mécanisme d'impression de cartes (16) inclut en outre :
- un trajet retour de déplacement de cartes (28) qui croise le trajet principal de déplacement de cartes (24) en aval et en amont de l'au moins un poste d'impression (26), le trajet retour de déplacement de cartes (28) étant configuré pour dévier une carte plastique (30), qui a été acheminée à travers l'au moins un poste d'impression (26) et qui a été imprimée sur une première face, du trajet principal de déplacement de cartes (24), et renvoyer la carte plastique (30) vers le trajet principal de déplacement de cartes (24) à un emplacement en amont de l'au moins un poste d'impression (26) afin d'acheminer à nouveau la carte plastique (30) à travers l'au moins un poste d'impression (26),
dans lequel le mécanisme d'impression de cartes (16) est configuré de telle sorte qu'au moins une carte plastique supplémentaire (30) reçoit une impression dans l'au moins un poste d'impression (26) pendant qu'une première carte plastique (30) est remise en circulation sur le trajet retour de déplacement de cartes (28) pour être à nouveau acheminée à travers l'au moins un poste d'impression (26).

2. Système de traitement de cartes (10) selon la revendication 1,
dans lequel le mécanisme d'impression de cartes (16) est configuré de telle sorte que deux cartes supplémentaires, trois cartes supplémentaires, quatre cartes supplémentaires, cinq cartes supplémentaires ou plus de cinq cartes supplémentaires sont imprimées dans l'au moins un poste d'impression (26) pendant que la première carte plastique (30) est remise en circulation.

3. Système de traitement de cartes (10) selon la revendication 1 ou 2,
dans lequel le mécanisme d'impression de cartes (16) est configuré pour remettre en circulation la carte plastique (30) sur le trajet retour de déplacement de cartes (28) de telle sorte que la carte plastique (30) est renvoyée vers le trajet principal de déplacement de cartes (24) à une position en aval du mécanisme d'acheminement de cartes (12) et en amont de l'au moins un poste d'impression (26).

4. Système de traitement de cartes (10) selon l'une des revendications précédentes,
comprenant en outre un mécanisme pour remettre en circulation de manière sélective des cartes plastiques (30) le long du trajet retour de déplacement de cartes (28).

5. Système de traitement de cartes (10) selon l'une des revendications précédentes,
dans lequel le système de traitement de cartes (10) est adapté pour transporter les cartes plastiques (30) le long du trajet principal de déplacement de cartes (24) et d'une portion (28b) du trajet retour de déplacement de cartes (28) à l'aide de rouleaux, de courroies, et de combinaisons de ceux-ci.

6. Système de traitement de cartes (10) selon l'une des revendications précédentes,
dans lequel le trajet retour de déplacement de cartes (28) est situé sur un plan au-dessus du trajet principal de déplacement de cartes (24).

7. Système de traitement de cartes (10) selon l'une des revendications précédentes,
dans lequel le système de traitement de cartes (10) est adapté pour retourner les cartes plastiques (30) de 180 degrés pendant que les cartes plastiques (30) sont transportées vers l'emplacement en amont de l'au moins un poste d'impression (26), dans lequel chaque carte plastique (30) est retournée de telle sorte que la face précédemment imprimée est orientée vers le bas et que la face non imprimée est orientée vers le haut.

8. Système de traitement de cartes (10) selon l'une des revendications précédentes,
comprenant un premier mécanisme de transport (36) et un second mécanisme de transport (40) pour transporter des cartes plastiques (30) entre le trajet principal de déplacement de cartes (24) et une portion du trajet retour de déplacement de cartes (28).

9. Système de traitement de cartes (10) selon la revendication 8,
dans lequel le premier mécanisme de transport (36) est situé en aval de l'au moins un poste d'impression (26) et le second mécanisme de transport (40) est situé en amont de l'au moins un poste d'impression (26).

10. Système de traitement de cartes (10) selon la revendication 8 ou 9,
dans lequel le premier et le second mécanisme de transport (36, 40) sont des mécanismes élévateurs.

11. Système de traitement de cartes (10) selon la revendication 8 ou 9,
dans lequel le premier et le second mécanisme de transport (36, 40) sont des mécanismes de rotation.

12. Système de traitement de cartes (10) selon l'une des revendications 8 à 11,
dans lequel le système de traitement (10) est adapté de telle sorte que
a) dès qu'une carte plastique (30) atteint le premier mécanisme de transport (36), si aucune impression supplémentaire n'est requise sur cette carte plastique (30), la carte plastique (30) est avancée à travers le premier mécanisme de transport (36) et hors du mécanisme d'impression de cartes (16) ; et
b) simultanément, pendant que la carte plastique (30) avance hors du mécanisme d'impression (16), une nouvelle carte plastique (30) est transportée vers le mécanisme d'impression de cartes (16) via le second mécanisme de transport (40).

13. Système de traitement de cartes (10) selon l'une des revendications précédentes, comprenant en outre un mécanisme de traitement de cartes (18) situé en aval du mécanisme d'impression de cartes (16) et recevant des cartes plastiques (30) de celui-ci, et une sortie de cartes (20) située en aval du mécanisme de traitement de cartes (18) dans laquelle sont évacuées les cartes plastiques traitées (30).

14. Système de traitement de cartes (10) selon la revendication 13,
dans lequel le système de traitement de cartes (10) comprend en outre un mécanisme d'assurance qualité situé entre la sortie de cartes (20) et le mécanisme de traitement de cartes (18).

15. Système de traitement de cartes (10) selon l'une des revendications précédentes,
dans lequel l'au moins un poste d'impression (26) est configuré pour effectuer une impression à goutte à la demande à l'aide d'une encre durcissable aux UV ; et dans lequel le mécanisme d'impression de cartes (16) inclut en outre un poste de traitement de surface (32) en amont de l'au moins un poste d'impression (26) et un poste de durcissement UV (34) en aval de l'au moins un poste d'impression (26).

16. Procédé de traitement de cartes plastiques (30) dans un système de traitement de cartes (10) qui inclut un mécanisme d'impression de cartes (16) doté d'un poste d'impression (26), le procédé comprenant :
- l'impression sur une première face d'une première carte plastique dans le système de traitement de cartes (10) à l'aide du poste d'impression (26) du mécanisme d'impression de cartes (16) ;
- après l'impression sur la première face de la première carte plastique, l'évacuation de la première carte plastique du poste d'impression (26) vers un emplacement en aval du poste d'impression (26), puis le transport de la première carte plastique vers un emplacement en amont du poste d'impression (26) sans passer par le poste d'impression (26) ;
- après l'impression sur la première face de la première carte plastique, l'impression sur une seconde face d'une deuxième carte plastique dans le système de traitement de cartes (10) à l'aide du poste d'impression (26) pendant que la première carte plastique est remise en circulation en retour,
dans lequel la deuxième carte plastique inclut sur sa première face une impression qui avait été préalablement appliquée sur cette même première face à l'aide du poste d'impression (26) ;
- après l'impression sur la seconde face de la deuxième carte plastique, l'impression sur une seconde face de la première carte plastique à l'aide du poste d'impression (26).

17. Procédé selon la revendication 16, comprenant en outre, après l'impression sur la première face de la première carte plastique et avant l'impression sur la seconde face de la première carte plastique, l'impression sur une d'une première face ou d'une seconde face d'une pluralité de cartes plastiques, en plus de la deuxième carte plastique, à l'aide du poste d'impression (26).
